# EUROPÄISCHE PATENTSCHRIFT

(11) **EP 0 477 674 B1**
(45) Veröffentlichungstag und Bekanntmachung des Hinweises auf die Patenterteilung: **10.05.1995**
(21) Anmeldenummer: 91115420.1
(22) Anmeldetag: 12.09.1991
(51) Int. Cl.: B65G 69/00, E06B 1/00

(54) **Verformbare Dichtung des Spaltes zwischen dem Rand einer Gebäudeöffnung und dem Heck eines an diese herangefahrenen Fahrzeuges**
Flexible sealing of the gap between the edge of an opening in a building and the rear of a vehicle drawn up to the same
Joint déformable pour la fente entre le bord d'une ouverture de bâtiment et l'arrière d'un véhicule s'y approchant

(30) Priorität: 25.09.1990 DE 4030253; 09.04.1991 DE 4111367
(43) Veröffentlichungstag der Anmeldung: 01.04.1992
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-A- 3 020 065
- DE-A- 3 631 591
- US-A- 2 681 698

## Beschreibung

Die Erfindung bezieht sich auf eine verformbare Dichtung des Spaltes zwischen dem Rand einer Gebäudeöffnung und dem Heck eines an diese herangefahrenen Fahrzeuges nach dem Oberbegriff des Anspruchs 1.

Derartige Dichtungen sind aus DE-A-3 631 591 bekannt.

Diese Dichtungen haben sich zwar bewährt, jedoch können Schwierigkeiten dann entstehen, wenn Lastkraftwagenpritschen vor der Dichtung befindlich abgestellt werden und zum Zwecke des Abziehens des Trägerfahrzeuges angehoben werden müssen, wozu Hübe bis zu 4o cm erforderlich werden können. Darüber hinaus sind die eingangs erwähnten Dichtungen auch für übermässig hohe Fahrzeuge ungeeignet.

Der Erfindung liegt die Aufgabe zugrunde, die eingangs erwähnten Dichtungen so zu verbessern, dass sie auch für die vorerwähnten Einsatzfälle geeignet sind.

Zur Lösung dieser Aufgabe sind erfindungsgemäss die Merkmale nach dem Kennzeichnungsteil des Anspruchs 1 vorgesehen. Demgemäss wird somit keine Hubbewegung, sondern eine Verschwenkung angewendet, indem der erwähnte Träger mit sich nach hinten erstreckenden Lenkern in der Weise verbunden wird, dass mit einer Lenkerverschwenkung der Träger an Höhe gewinnt, nach den vorgenannten Anwendungsfällen aber durch Zurückschwenken wieder in die ursprüngliche Lage gebracht werden kann. Dazu können Anschläge vorgesehen werden, auf denen die Lenker bzw. der Träger in der Normalstellung ruhen.

Normalerweise bedarf es keiner Antriebsmittel z.B. hydraulischer Schwenkzylinder, um den Träger anzuheben. Es ist ausreichend, von solchen Mitteln abzusehen und das Anheben bzw. Verschwenken durch den vom Fahrzeug auf die Dichtung bewirkten Druck herbeizuführen. Der Träger mit den erwähnten zusätzlichen Elementen weicht also der Einwirkung eines Fahrzeuges aus, was auch dann geschehen kann, wenn der waagerechte Druck auf das Querteil zu gross wird, sich dieses schräg nach hinten wölbt und dann aufgrund der senkrechten Kraftkomponenten eine Hubkraft entstehen kann.

Weitere Einzelheiten der Erfindung werden anhand der Zeichnung erläutert, in der ein Ausführungsbeispiel der Erfindung dargestellt ist.

Es zeigen :

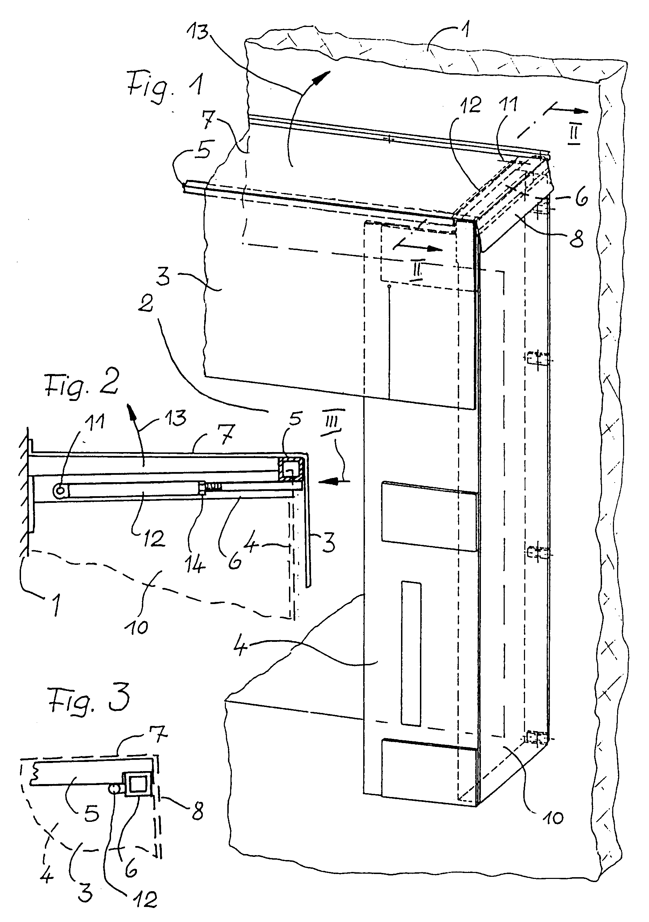

- Fig. 1: die rechte Hälfte einer sog. Torabdichtung in schaubildlicher Darstellung,
- Fig. 2: einen Teilschnitt nach der Linie II - II von Fig. 1
- Fig. 3: eine Einzelheit aus Fig. 2 in Richtung des Pfeiles III gesehen und
- Fig. 4 und 5: je eine der Fig. 2 entsprechende Schnittdarstellung.

Die Wandung 1 des Gebäudes hat eine Gebäudeöffnung 2, der ein Tor z.B. ein Sektionaltor zugeordnet sein kann. Um den Spalt der Gebäudeöffnung 2 bzw. dem Rand dieser Öffnung gegenüber dem Heck eines angedockten Fahrzeuges abzudichten, ist die Dichtung gemäss Zeichnung vorgesehen.

Mit Abstand von der Wandung 1 ist eine verformbare Schürze vorgesehen, die aus einem oben gelegenen Querteil 3 und zwei zu beiden Seiten der Gebäudeöffnung 2 befindlichen, senkrechten Streifen 4 besteht. Die Bauelemente 3, 4 bestehen aus einem lappigen, folienartigen Material, das eine Verformung und eine Anpassung an die Kontur des Fahrzeuges zulässt. In der Regel bestehen diese Teile aus mit Kunststoff oder Gummi behandelten Geweben.

Das Querteil 3 ist an seinem oberen Rand gardinenartig an einem Querträger 5 befestigt, von dem aus sich eine Dachplane 7 nach hinten erstreckt. Sie ist an der Aussenwand 1 befestigt. Dieser Querträger 5 ist an seinen Enden unten ausgespart. In die Aussparung greift ein an der Aussenwand 1 befestigter Arm 6 ein, der somit den Querträger 5, das Querteil 3 und vorne die Dachplane 7 unterfängt und hält. Im übrigen ist die Dachplane 7 an ihren Enden mit einem frei herabhängenden Überhang 8 versehen.

Die beiden Streifen 4 werden von an der Aussenwand 1 befestigten, in Richtung auf diese Wand elastisch nachgiebigen Tragkörpern 1o gehalten.

An den einander zugekehrten Seiten der Arme 6 ist ein Wagerechter Bolzen 11 gelagert, der zur verschwenkbaren Lagerung eines Lenkers 12 dient, welcher parallel zu den Armen gerichtet und vorne fest mit dem Querträger 5 verbunden ist. Da die Enden des Querträgers 5 nur lose aufgrund ihres Eigengewichts und des Gewichts der zugehörigen Elemente auf den Armen 6 aufliegen, kann der Querräger 5 zusammen mit dem Querteil 3 und der Dachplane 7 sowie den beiden seitlichen Überhängen 8 in Richtung der Pfeile 13 nach oben verschwenken.

Um die Länge des Lenkers 12 zum Justieren verändern zu können, ist er zweiteilig ausgebildet, wobei das eine Teil mehr oder weniger in das andere hineingeschraubt werden kann und eine Fixierung durch eine Kontermutter 14 geschieht.

Da die Lagerung der Streifen 4 mit Hilfe der Tragkörper 1o von derjenigen des Querteils 3 unabhängig ist, wird durch die erwähnte Schwenkbewegung lediglich der Querträger 5 mit den verbundenen Elementen bewegt; die Streifen 4 und die Tragkörper 1o bleiben also von dieser Bewegung unberührt und somit in Ruhe.

Eine Schwenkbewegung im vorgenannten Sinne erfolgt z.B. dann, wenn eine Pritsche mit Trägerfahrzeug angedockt ist und später die Pritsche zum Entfernen des Trägerfahrzeuges abgehoben und dann abgesetzt werden muss. Für dieses Manöver wird die Verschwenkbarkeit ausgenutzt. Sie kann aber auch dann. von Nutzen sein, wenn ein überhohes Fahrzeug auf das Querteil 3 auftrifft und dieses schräg nach hinten oben durchwölbt. Dabei ergibt sich eine Hubkomponente, die zum Abheben des Querträgers 5 mit Elementen führt. Auf diese Weise können auch Beschädigungen der Dichtung ausgeschlossen werden.

Die Verstellbarkeit der Armlänge hat auch noch den Vorteil, dass die Spannung der Dachplane 7 verändert werden kann.

Aufgrund der Erfindung kann der Querträger 5 auch durch eine Feder od. dgl. in seiner Ruhestellung gehalten werden, die dann zum Abheben bzw. Verschwenken überwunden werden müsste.

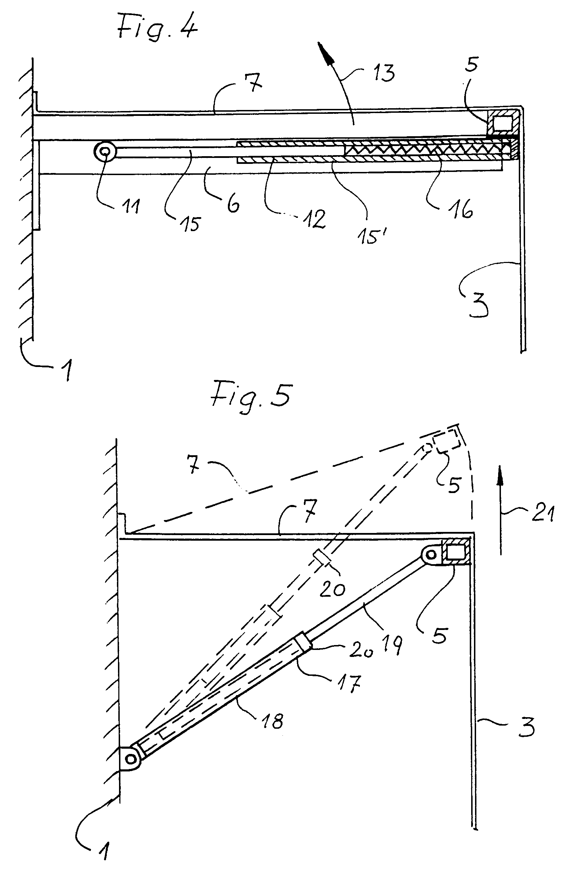

Bei der Ausführung gemäss Fig. 4 ist der Lenker 12 teleskopartig ausgeführt; die an dem Bolzen 11 gelagerte Stange 15 ist in einem Rohr 15' längsverschiebbar angeordnet in der Weise, dass die Länge des Lenkers 12 gegen die Wirkung einer in dem mit dem Querträger 5 fest verbundenen Rohr 15 befindlichen Druckfeder 16 verkleinerbar ist, wenn auf das Querteil 3 ein Druck in Richtung auf die Wandung 1 ausgeübt wird, um so auch dem Querträger 5 die Möglichkeit einer nachgebenden Bewegung nach hinten zu geben. Auch bei dieser Ausführungsform liegt der Querträger 5 verschiebbar auf den Armen 6 auf, und der Lenker 12 kann zudem eine Schwenkbewegung in Richtung des Pfeiles 13 nach oben ausführen. Ggfs. kann auch der Lenker 12 zur alleinigen Abstützung des Querträgers 5 ausgeführt sein; dazu muss durch ein Widerlager od. dgl. ein Abklappen der Lenker 12 nach unten vermieden werden. Arme 6 wären in diesem Falle nicht nötig.

Bei der Ausführung gemäss Fig. 5 wird der Querträger 5 ( mit den Elementen 3, 7 ) durch an seinen Enden angreifende und diese unterfangende Lenkern 17 gehalten, die weit unterhalb des Querträgers 5 an der Wandung 1 angelenkt sind und dann schräg nach oben geführt am Querträger 5 angreifen, und zwar ebenfalls gelenkig. Auch die Lenker 17 sind teleskopartig ausgeführt, das unten befindliche Rohr 18 dient zur Aufnahme einer Stange 19 mit Anschlag 2o, der in der Normalstellung des Querträgers 5 an der oberen Stirnseite des Rohres 18 anliegt. Wirken nunmehr auf den Querträger 5 bzw. das Querteil 3 nach oben wirkende Kräfte ein im Sinne des Pfeiles 21, so schwenkt der Lenker 17 nach oben ( z.B. in die gestrichelt wiedergegebene Stellung ), wobei sich der Anschlag 2o von dem Rohr 18 entsprechend entfernt. Lassen die Kräfte nach, gelangt der Querträger 5 wieder unter dem Eigengewicht - auch der damit verbundenen Teile 3, 7 - in seine Ausgangslage, die wiederum durch den Anschlag an der Stirnfläche des Rohres 18 bestimmt ist. Somit wird eine Hubbewegung des Querträgers 5 sichergestellt, ohne dazu besondere Konsolen oder die erwähnten Arme 6 benötigen zu müssen. Die Lenker 17 dienen also zur Halterung und zur Ermöglichung einer Hubbewegung.

## Patentansprüche

1. Verformbare Dichtung des Spaltes zwischen dem Rand einer Gebäudeöffnung und dem Heck eines an diese herangefahrenen Fahrzeuges mit einer lappigen, verformbaren Schürze aus zwei zu beiden Seiten der Gebäudeöffnung angeordneten, verformbaren senkrechten Streifen (4) und einem im Bereich der oberen Streifenenden befindlichen Querteil (3), von dem aus sich nach hinten zum Gebäude hin eine Dachplane (7) erstreckt, wobei die beiden Streifen (4) je durch einen am Gebäude gelagerten, in Richtung auf das Gebäude elastisch nachgiebigen Tragkörper (10) gehalten sind und das Querteil (3) an seinem oberen Rand mit einem Querträger (5) verbunden ist, dadurch gekennzeichnet, dass der Querträger mit dem Querteil (3) und der Dachplane (7) heb- und senkbar gelagert ist,
wobei der Querträger (5) durch im Bereich der Wandung (1) des Gebäudes um eine waagerechte Achse verschwenkbare, unter der Dachplane (7) angeordnete Lenker (12) verschwenkbar ist.

2. Dichtung nach Anspruch 1, dadurch gekennzeichnet, dass der Querträger (5) mit dem Querteil (3) und der Dachplane (7) gegen die Wirkung seines Eigengewichtes ggfs. gegen die Wirkung einer zusätzlichen kleinen Rückstellkraft ( Federwirkung ) anhebbar ist.

3. Dichtung nach Anspruch 1, dadurch gekennzeichnet, dass die Länge der Lenker (12) verstellbar ist.

4. Dichtung nach Anspruch 1 - 3, dadurch gekennzeichnet, dass der nicht verschwenkte Querträger (5) lose auf einem Widerlager ( Arm 6 ) bzw. die den Querträger führenden Lenker (12) auf diesem Widerlager aufliegen.

5. Dichtung nach Anspruch 2 und 4, dadurch gekennzeichnet, dass der Querträger (5) im Bereich seiner Enden - vorzugsweise mit einer Aussparung - auf einem am Gebäude gelagerten Arm (6) aufliegt.

6. Dichtung nach Anspruch 5, dadurch gekennzeichnet, dass die Lenker (12) an den Armen (6) gelagert sind und sich parallel dazu erstrecken.

7. Dichtung nach Anspruch 1, dadurch gekennzeichnet, dass die Lenker (12) gegen die Wirkung einer Rückstellkraft ( Druckfeder 16 ) verkürzbar sind.

8. Dichtung nach Anspruch 7, dadurch gekennzeichnet, dass die Lenker (12) teleskopartig ausgeführt sind und sich innerhalb der Lenker eine Druckfeder (16) befindet ( Fig. 4 ).

9. Dichtung nach Anspruch 1, dadurch gekennzeichnet, dass die Lenker (12) gegen Herabschwenken von der Normalstellung ( Fig. 4 ) aus gesichert sind und zum alleinigen Unterfangen des Querträgers (5) mit Querteil (3) und Dachplane (7) dienen.

10. Dichtung nach Anspruch 1, dadurch gekennzeichnet, dass der Querträger (5) ( mit dem Querteil 3 und der Dachplane 7 ) von längenvergrösserbaren Schräglenkern (17) unterfangen und in seiner Normalstellung gehalten ist.

11. Dichtung nach Anspruch 10, dadurch gekennzeichnet, dass die Schräglenker (17) weit unterhalb der Dachplane (7) an der Wandung (1) des Gebäudes oder einem anderen fest mit dem Gebäude verbundenen Teil gelenkig mit dieser Wandung bzw. Teil und vorzugsweise auch mit ihrem oberen Ende gelenkig mit dem Querträger (5) verbunden sind.

12. Dichtung nach Anspruch 10, dadurch gekennzeichnet, dass die Schräglenker (17) im wesentlichen aus einer in ein Rohr (18) eingeschobenen Stange (19) bestehen, die mit einem auf der Stirnseite des Rohres anliegenden und von dort entfernbaren Anschlag (2o) versehen ist.

13. Dichtung nach Anspruch 9 und 10, dadurch gekennzeichnet, dass die Lenker (12,17) mit den Enden des Querträgers (5) verbunden sind.

14. Dichtung nach Anspruch 13, dadurch gekennzeichnet, dass sich zu beiden Seiten der Dichtung - seitlich aussen - je ein Lenker (12,17) befindet.

## Claims

1. Deformable seal for sealing the gap between the edge of a building opening and the rear of a vehicle which has been driven up to said opening, having a soft, deformable apron formed from two deformable, vertical strips (4), which are disposed on both sides of the building opening, and a transverse member (3), which is situated in the region of the upper strip ends and from which a top cover (7) extends rearwardly towards the building, the two strips (4) each being retained by a supporting body (10), which is mounted on the building and is elastically resilient in the direction of the building, and the transverse member (3) being connected at its upper edge to a transverse support (5), characterised in that the transverse support is mounted so as to be raisable and lowerable together with the transverse member (3) and the top cover (7), the transverse support (5) being pivotable by guide means (12), which are pivotable about a horizontal axis in the region of the wall (1) of the building and are disposed beneath the top cover (7).

2. Seal according to claim 1, characterised in that the transverse support (5) is raisable, together with the transverse member (3) and the top cover (7), in opposition to the effect of its own weight, or possibly in opposition to the effect of an additional small restoring force (spring action).

3. Seal according to claim 1, characterised in that the length of the guide means (12) is adjustable.

4. Seal according to claims 1 - 3, characterised in that the non-pivoted transverse support (5) rests loosely on an abutment (arm 6), or respectively the guide means (12), which guide the transverse support, rest on this abutment.

5. Seal according to claims 2 and 4, characterised in that the transverse support (5) in the region of its ends - preferably with a recess - rests on an arm (6) mounted on the building.

6. Seal according to claim 5, characterised in that the guide means (12) are mounted on the arms (6) and extend parallel thereto.

7. Seal according to claim 1, characterised in that the guide means (12) can be shortened in opposition to the effect of a restoring force (compression spring 16).

8. Seal according to claim 7, characterised in that the guide means (12) are telescopic, and a compression spring (16) is situated internally of the guide means (Fig. 4).

9. Seal according to claim 1, characterised in that the guide means (12) are prevented from pivoting from the normal position (Fig. 4) and serve the sole purpose of supporting the transverse support (5) together with transverse member (3) and top cover (7).

10. Seal according to claim 1, characterised in that the transverse support (5) (together with the transverse member 3 and the top cover 7) is supported by longitudinally extensible inclined guide means (17) and retained in its normal position.

11. Seal according to claim 10, characterised in that, a long way below the top cover (7) on the wall (1) of the building or on another part which is securedly connected to the building, the inclined guide means (17) are pivotally connected to said wall or part and are preferably also pivotally connected to the transverse support (5) with their upper end.

12. Seal according to claim 10, characterised in that the inclined guide means (17) substantially comprise a rod (19), which is inserted into a tube (18) and is provided with a stop member (20) which lies on the end face of the tube and is removable therefrom.

13. Seal according to claims 9 and 10, characterised in that the guide means (12, 17) are connected to the ends of the transverse support (5).

14. Seal according to claim 13, characterised in that a respective guide means (12, 17) is situated on each side of the seal - laterally externally.

## Revendications

1. Dispositif d'étanchéité déformable de l'intervalle entre le bord d'une baie d'un bâtiment et l'arrière d'un véhicule automobile s'en rapprochant, qui comporte une jupe flasque déformable constituée de deux bandes (4) verticales déformables, de part et d'autre de la baie du bâtiment et d'une partie (3) transversale qui se trouvent dans la région des extrémités supérieures des bandes et de laquelle une bâche formant toit (7) s'étend vers l'arrière en direction du bâtiment, les deux bandes (4) étant maintenues chacune par un support (10) monté sur le bâtiment et qui cède élastiquement en direction du bâtiment, tandis que la partie (3) transversale est reliée, par son bord supérieur, à une poutrelle (5) transversale, caractérisé en ce que la poutrelle (5) transversale équipée de la partie (3) transversale et de la bâche formant toit (7) est montée de manière à pouvoir être soulevée et abaissée, la poutrelle (5) transversal (5) pouvant basculer grâce à des bielles (12) qui sont montées, dans la région du mur (1) du bâtiment en-dessous de la bâche formant toit (7), basculantes par rapport à un axe horizontal.

2. Dispositif d'étanchéité suivant la revendication 1, caractérisé en ce que la poutrelle (5) transversale équipée de la partie (3) transversale et de la bâche formant toit (7) peut être soulevée à l'encontre de l'action de son poids propre et éventuellement à l'encontre d'un petit ressort de rappel supplémentaire (action élastique).

3. Dispositif d'étanchéité suivant la revendication 1, caractérisé en ce que la longueur des bielles (12) est réglable.

4. Dispositif d'étanchéité suivant les revendications 1-3, caractérisé en ce que la poutrelle (5) transversale, lorsqu'elle n'a pas basculé, s'applique de façon lâche à une butée (bras 6) ou les bielles (12), qui guident la poutrelle (5) transversale, s'appliquent à cette butée.

5. Dispositif d'étanchéité suivant les revendications 2 et 4, caractérisé en ce que la poutrelle (5) transversale s'appuie, dans la zone de ses extrémités - de préférence comportant un évidement - sur un bras (6) monté sur le bâtiment.

6. Dispositif d'étanchéité suivant la revendication 5, caractérisé en ce que les bielles (12) sont montées sur les bras (6) et s'étendent parallèlement à ces derniers.

7. Dispositif d'étanchéité suivant la revendication 1, caractérisé en ce que les bielles (12) peuvent être raccourcies à l'encontre de l'action d'un ressort de rappel (ressort de compression 16).

8. Dispositif d'étanchéité suivant la revendication 7, caractérisé par le fait que les bielles (12) sont télescopiques et qu'un ressort de compression (16) se trouve à l'intérieur des bielles (figure 4).

9. Dispositif d'étanchéité suivant la revendication 1, caractérisé en ce que les bielles (12) sont empêchées de basculer à partir de la position normale (figure 4) et servent uniquement à supporter la poutrelle (5) transversale équipée de la partie (3) transversale et de la bâche formant toit (7).

10. Dispositif d'étanchéité suivant la revendication 1, caractérisé en ce que la poutrelle (5) transversale (équipée de la partie 3 transversale et de la bâche formant toit (7) est supportée et est maintenue dans sa position normale par des bielles obliques (17), dont la longueur peut être augmentée .

11. Dispositif d'étanchéité suivant la revendication 10, caractérisé en ce que les bielles obliques (17) sont articulées, bien en-dessous de la bâche formant toit (7), au mur (1) du bâtiment ou à une autre partie reliée de façon fixe au bâtiment, en étant de préférence également articulées, par leur extrémité supérieure, à la poutrelle (5) transversale.

12. Dispositif d'étanchéité suivant la revendication 10, caractérisé en ce que les bielles obliques (17) sont constituées essentiellement d'une barre (19), qui est insérée dans un tube (18) et qui est équipée d'une butée (20), qui s'applique sur la face frontale du tube et peut en être écartée.

13. Dispositif d'étanchéité suivant les revendications 9 et 10, caractérisé en ce que les bielles (12,17) sont reliées aux extrémités de la poutrelle (5) transversale.

14. Dispositif d'étanchéité suivant la revendication 13, caractérisé en ce qu'une bielle (12,17) se trouve respectivement de part et d'autre du dispositif d'étanchéité - latéralement à l'extérieur.
